# EUROPÄISCHE PATENTSCHRIFT

(11) **EP 1 848 906 B1**
(45) Veröffentlichungstag und Bekanntmachung des Hinweises auf die Patenterteilung: **05.11.2008**
(21) Anmeldenummer: 06705985.7
(22) Anmeldetag: 17.02.2006
(51) Int. Cl.: F16K 27/07, B65D 90/62, F16K 25/04

(54) **ABSPERRVENTIL**
STOP VALVE
SOUPAPE D'ARRET

(30) Priorität: 17.02.2005 DE 102005007519
(43) Veröffentlichungstag der Anmeldung: 31.10.2007
(73) Patentinhaber: HERMANNS Silo Gmbh, 51149 Köln-Porz-Gremberghoven (DE)
(72) Erfinder: HERMANNS, Karl, 51147 Köln-Porz-Grengel (DE); HEINRICHS, Waldemar, 40764 Langenfeld (DE)
(74) Vertreter: Lippert, Hans-Joachim
(86) Internationale Anmeldenummer: PCT/DE2006/000300
(87) Internationale Veröffentlichungsnummer: WO 2006/086976

(56) Entgegenhaltungen:
- EP-A- 0 292 031
- NL-C- 112 730
- US-A- 4 512 702
- US-A- 5 385 437
- US-A- 5 411 242

## Beschreibung

Die Erfindung betrifft ein Absperrventil für rieselfähiges Schüttgut, mit einem Gehäuse, das eine Zuflussseite aufweist, mit der es an einen Silobehälter anschließbar ist und mit einem Dichtungsbereich an einer Auslaufseite des Gehäuses, sowie mit einem Verschlusselement, das eine Dichtung aufweist, die mit einer in dem Dichtungsbereich des Gehäuses vorgesehenen Dichtungsfläche zusammenwirkt, wobei das Verschlusselement über eine Hubeinheit in eine Absperrposition hinein und aus der Absperrposition hinaus bewegbar ist, wobei ein Abschirmungselement vorgesehen ist, mit der Maßgabe, dass zumindest die Dichtung des Verschlusselements von dem Abschirmungselement wenigstens teilweise gegen fließendes Schüttgut abgeschirmt ist, und wobei ein Hohlraum zwischen dem Abschirmungselement und dem Verschlusselement vorgesehen ist.

Ein gattungsgemäßes Absperrventil ist aus dem Ausführungsbeispiel gemäß Figuren 6 bis 8 der US 4,512,702 bekannt. Ein weiteres Absperrventil ist aus der EP 0 292 031 B1 bekannt. Das Absperrventil ist für Silobehälter vorgesehen und an einem solchen angebracht. Es dient der Entleerung von rieselfähigem Schüttgut aus dem Silobehälter. In der Regel ist dem Absperrventil eine Entleerungsleitung nachgeschaltet, durch die das Schüttgut weiterbefördert wird.

Das Gehäuse des bekannten Absperrventils weist einen Trichter auf. An der engen Seite des Trichters ist ein Flansch vorgesehen, mit dem der Trichter an einem Anschlussstück der Entleerungsleitung angebracht ist. Die weite Seite des Trichters bildet die Zuflussseite des Gehäuses. Dort fließt Schüttgut aus dem Silobehälter in das Absperrventil. Die zylindrische Innenseite des Flansches bildet den Dichtungsbereich des Absperrventils. Innerhalb des Trichters ist ein Verschlusselement angeordnet. Das Verschlusselement weist eine zylindrische Außenfläche auf, die in die zylindrische Innenseite des Flansches passt. Das Verschlusselement ist auf diese Weise in die innerhalb des Flansches liegende Absperrposition hinein und aus der Absperrposition heraus bewegbar. In der zylindrischen Außenfläche des Verschlusselements ist eine Dichtung eingelassen, wie ein Kolbenring in eine Nut eines Kolbens.

Zum Öffnen des Absperrventils muss das Verschlusselement vollständig aus dem zylindrischen Flansch hinausbewegt werden, wodurch die Dichtung frei wird. Wenn Schüttgut aus dem Silobehälter durch das Absperrventil fließt, ist die Dichtung des Verschlusselements der Strömung des Schüttguts ausgesetzt. Ungünstigerweise unterliegt sie dadurch einem starken Verschleiß.

Außerdem bildet der Übergang des trichterförmigen Gehäuses in die zylindrische Innenfläche des Flansches eine umlaufende Kante. Nachteilig ist, dass die Dichtung des Verschlusselements bei jedem Schließvorgang des Absperrventils über diese Kante schert und zunehmend beschädigt wird.

Darüber hinaus ist gattungsfremder Stand der Technik bekannt aus der US 5,385,437, NL 112 730 und US 5,411,242. Diese lehren ein Absperrventil mit einem Verschlusselement, wobei das Verschlusselement mit einer außen an einem Silobehälter angeordneten Hubeinheit betätigt werden muss.

Aus dem Stand der Technik ergibt sich die Aufgabe, das gattungsgemäße Absperrventil so weiterzubilden, dass dessen Langlebigkeit verbessert wird.

Erfindungsgemäß wird die Aufgabe dadurch gelöst, dass eine erste Öffnung vorgesehen ist, durch die Schüttgutpartikel und Staubpartikel in den Hohlraum eindringen können, und dass eine zweite Öffnung vorgesehen ist, durch die Staubpartikel aus dem Hohlraum ausleitbar sind.

Die Hubeinheit kann beispielsweise eine Schwenk- oder geradlinige Hubbewegung ausführen. Einfacherweise ist eine Spindel oder Kolbenstange vorgesehen, welche die Hubbewegung in das Verschlusselement überträgt.

Die neue Konstruktion bewirkt, dass die Dichtung des Verschlusselements vor fließendem Schüttgut geschützt ist. Die Dichtung ist nicht mehr der direkten Strömung ausgesetzt, wenn das Absperrventil geöffnet ist.

Die Abschirmung ist zu dem Zweck auf der Zuströmungsseite des Verschlusselements angeordnet, während die gegenüberliegende Schattenseite des in der Strömung befindlichen Verschlusselements keine Abschirmung aufweisen muss.

Auf der Schattenseite bildet sich allenfalls ein Strömungstotraum oder leichte Verwirbelungen des fließenden Schüttguts. Dadurch ist der Grad der Abnutzung der Dichtung auf der Schattenseite der Strömung vernachlässigbar gering.

Die Maßnahme, ein Abschirmungselement für die Dichtung des Verschlusselements zu ergänzen, erhöht die Lebensdauer der Dichtung um ein Vielfaches. Wartungsintervalle können dadurch verlängert und Kosten gesenkt werden.

Besonders zuverlässig ist das Absperrventil, weil ein Hohlraum, zwischen dem Abschirmungselement und dem Verschlusselement sowie wenigstens eine erste Öffnung vorgesehen ist, durch die Staubpartikel in den Hohlraum eindringen können, und wenigstens eine zweite Öffnung vorgesehen ist, durch die Staubpartikel aus dem Hohlraum ausleitbar sind. Der Hohlraum dient dazu, eine relative Verschiebbarkeit zwischen dem Abschirmungselement und dem Verschlusselement dauerhaft sicherzustellen. Die Öffnungen sind so ausgelegt, dass der Hohlraum nicht in einem Maß mit Staubpartikeln angefüllt werden kann, welches die relative Verschiebbarkeit von Abschirmungselement und Verschlusselement derart beeinträchtigt, dass die Funktion des Absperrventils gestört ist.

Eine Verbesserung des Absperrventils besteht darin, dass in dem Dichtungsbereich des Gehäuses eine Anlagefläche für das Abschirmungselement vorgesehen ist und dass durch die Anlagefläche eine Anlageposition für das Abschirmungselement vorgegeben ist. Auf diese Weise ergibt sich eine zweistufige Abdichtung im geschlossenen Zustand des Absperrventils. Die erste Stufe der Abdichtung bildet das Abschirmungselement, das in seiner Anlageposition fest an einer Anlagefläche in dem Dichtungsbereich des Gehäuses anliegt. Der Druck des auf dem Abschirmungselement lastenden Schüttguts verursacht hierbei eine Anpressung des Abschirmungselements gegen die Anlagefläche. Die zweite Stufe der Abdichtung bildet das Verschlusselement, dessen Dichtung in der Absperrposition an der Dichtungsfläche des Gehäuses anliegt.

Zweckmäßig ist die Anlagefläche für das Abschirmungselement in Fließrichtung des Schüttguts vor der Dichtungsfläche für die Dichtung des Verschlusselements angeordnet. Dies bewirkt, dass beim Schließen des Absperrventils in zeitlicher Folge zuerst das Abschirmungselement seine Anlageposition erreicht und anschließend das Verschlusselement in seine Absperrposition hineinbewegt wird. Im ersten Schritt, während das Abschirmungselement allmählich auf die Anlagefläche zu bewegt wird, verringert sich allmählich der Spalt zwischen dem Abschirmungselement und der Anlagefläche, wodurch immer weniger Schüttgut durch den sich verengenden Spalt fließt. Stetig verringert sich die Korngröße der Schüttgutkörner, die noch durch den Spalt passen.

Zwischen dem Abschirmungselement und der Anlagefläche können kleine Partikel des Schüttguts eingeklemmt werden, so dass ein minimaler Restspalt bleibt. Dennoch ist die Strömung weitgehend unterbrochen. Nur vereinzelt können sehr kleine Partikel den Restspalt passieren. Diese minimale Strömung kleiner Schüttgutpartikel ist jedoch für die Abnutzung der Dichtung vernachlässigbar.

Erst dann, wenn die Anlageposition des Abschirmungselements erreicht ist, nähert sich das Verschlusselement seiner Absperrposition, die es erreicht, ohne einer nennenswerten Strömung ausgesetzt zu sein.

Darüber hinaus ist es hilfreich, wenn eine Führungseinrichtung für das Abschirmungselement vorgesehen ist. Die Führungseinrichtung lässt eine relative Bewegung zwischen Abschirmungselement und Verschlusselement zu. Beide Teile können unterschiedliche Distanzen zueinander einnehmen. Vorteilhafterweise unterbindet die Führungseinrichtung jedoch einen exzentrischen Versatz zwischen Abschirmungselement und Verschlusselement.

Ein weiterer Nutzen wird erreicht, wenn durch die Führungseinrichtung ein Bewegungsbereich für das Abschirmungselement vorgegeben ist. Die möglichen Distanzen zwischen Abschirmungselement und Verschlusselement erhalten auf diese Weise eine Begrenzung. Der Bewegungsbereich ist einerseits so ausgelegt, dass die Funktion der Vorrichtung gewährleistet ist. Andererseits kann die Zugänglichkeit einzelner Bauteile für Montage- und Wartungsarbeiten maßgeblich für die Bemessung des Bewegungsbereichs sein.

Beispielsweise ist der Bewegungsbereich wenigstens so groß, wie der in Fließrichtung des Schüttguts vorgesehene Abstand zwischen der Absperrposition des Verschlusselements und der Anlageposition des Abschirmungselements. Auf diese Weise ist die technische Funktion der vorstehend beschriebenen zweistufigen Abdichtung gewährleistet.

Einfacherweise ist der Bewegungsbereich durch wenigstens einen Sperranschlag begrenzt.

Günstigerweise ist der Sperranschlag mit der Hubeinheit verbunden. Auf diese Weise verlagert sich der gesamte Bewegungsbereich des Abschirmungselements während die Position des Verschlusselements verändert wird. Eine sichere Funktion der ersten Abdichtungsstufe wird dadurch erreicht, dass das Abschirmungselement dann von dem Sperranschlag gegen die Anlagefläche gedrückt ist, wenn das Verschlusselement von der Hubeinheit in seine Absperrposition hinein bewegt worden ist. Das Abschirmungselement wird ohnehin durch die Last des Schüttguts gegen die Anlagefläche gedrückt. Zusätzlich leitet die Hubeinheit über den Sperranschlag eine Kraft in das Abschirmungselement, das dadurch fester gegen die Anlagefläche gedrückt wird. Je nach Beschaffenheit des Schüttguts können Schüttgutpartikel dadurch zerquetscht werden, um eine hohe Dichtigkeit an der Anlagefläche zu erreichen.

In diesem Zusammenhang ist zu erwähnen, dass die an der Anlagefläche anliegende Kante des Abschirmungselements eine besondere Gestaltung und Beschaffenheit aufweisen kann. Diese Gestaltung ist günstigerweise auf das jeweilige Schüttgut abgestimmt. Die Kante kann beispielsweise als Schneidkante gestaltet sein, um Schüttgutpartikel zu zertrennen. Dies ist beispielsweise dann zweckmäßig, wenn andernfalls eingeklemmte Schüttgutpartikel soweit hervor ragen würden, dass die Dichtung des Verschlusselements daran entlang reiben würde. Eine Schneid- oder Quetschkante, die Schüttgutpartikel durchtrennt, schont somit die Dichtung.

Weiterhin günstig für die Erhöhung der Lebensdauer der Dichtung ist es, wenn die Dichtungsfläche in Bezug auf die Fließrichtung des Schüttguts schräg angeordnet ist, nämlich von der Zuflussseite des Gehäuses in Richtung der Abflussseite des Gehäuses von außen nach innen geneigt ist. Wenn das Verschlusselement einen kreisrunden Querschnitt aufweist, dann entspricht die Dichtungsfläche beispielsweise der Mantelfläche eines Kegelstumpfes. Unabhängig von der Form des Verschlusselements ergibt sich durch die geneigte Dichtungsfläche der Vorteil, dass die Dichtung des Verschlusselements ohne über eine umlaufende Kante zu scheren, schonend gegen die Dichtungsfläche bewegt werden kann. Ein weiterer Vorteil der schräg angeordneten Dichtungsfläche besteht darin, dass keine Schüttgutpartikel auf der Dichtungsfläche liegen bleiben können. Schüttgutpartikel rutschen stets von der Dichtungsfläche herab. Auf diese Weise ist für die Dichtung immer eine saubere Dichtungsfläche vorhanden.

Weiter verbessert wird das Absperrventil wenn der Querschnitt der ersten Öffnung geringer ist als der Querschnitt der zweiten Öffnung. Auf diese Weise ist der Zufluss von Staubpartikeln stets geringer als die Menge der durch die zweite Öffnung ausleitbaren Staubpartikel.

Überdies ist es nützlich, wenn das Gehäuse mit einer Auflockerungseinrichtung versehen ist, durch die Pressluft von außen in das Gehäuse einleitbar ist. Prinzipiell ist das Gehäuse mit jeder bekannten Auflockerungseinrichtung kombinierbar, wie beispielsweise Rückschlagventilen in Form von sogenannten Auflockerungspilzen, einer Auflockerungseinrichtung mit luftdurchlässigem Textilgewebe oder mit feinen Düsen- oder Spaltöffnungen, wenn diese kleiner sind als die Partikel oder Körner des zu befördernden Schüttguts.

Nachstehend ist die Erfindung in einer Zeichnung beispielhaft dargestellt und detailliert beschrieben. Es zeigen:
- Fig. 1: eine Schnittdarstellung eines Absperrventils im geöffneten Zustand,

- Fig. 2: eine Schnittdarstellung des Absperrventils gemäß Fig. 1 im geschlossenen Zustand,
- Fig. 3: eine perspektivische Ansicht eines Absperrventils,
- Fig. 4: eine alternative Ausführungsform eines Absperrventils mit variiertem Dichtungsbereich.

Nach der Zeichnung besteht das Absperrventil 1 aus einem trichterförmigen Gehäuse 2, das eine Zuflussseite 2a und eine Abflussseite 2b aufweist. Die Zuflussseite 2a ist diejenige Seite des trichterförmigen Gehäuses 2 mit dem großen Querschnitt. An dieser Seite weist das Gehäuse 2 einen Anschlussring 3 auf, mit dem es an einem Silobehälter 4 anschließbar ist. Diejenige Seite des trichterförmigen Gehäuses 2 mit dem kleinen Querschnitt bildet die Abflussseite 2b, die üblicherweise an eine Entleerungsleitung 5 angeschlossen ist. Die Abflussseite 2b weist daher eine Entleerungsöffnung 6 auf und ist mit einem Dichtungsbereich 7 für ein Verschlusselement versehen.

Das Verschlusselement ist in Form eines Verschlusstellers 8 ausgebildet und beweglich innerhalb des Gehäuses 2 angeordnet. Mit dem Verschlussteller 8 lässt sich die Abflussseite 2b des Gehäuses 2 öffnen und schließen.

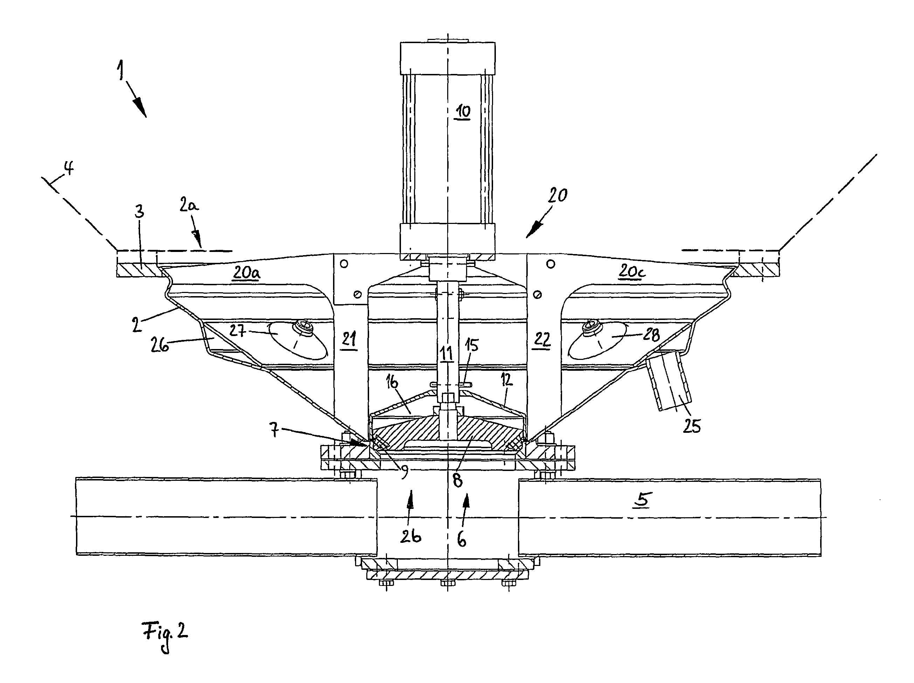

Der Verschlussteller 8 weist eine Dichtung 9 auf, die im geschlossenen Zustand des Absperrventils 1 an einer Dichtungsfläche 7a des Dichtungsbereichs 7 anliegt. Diese in Fig. 2 gezeigte Position bildet eine Absperrposition des Verschlusstellers 8.

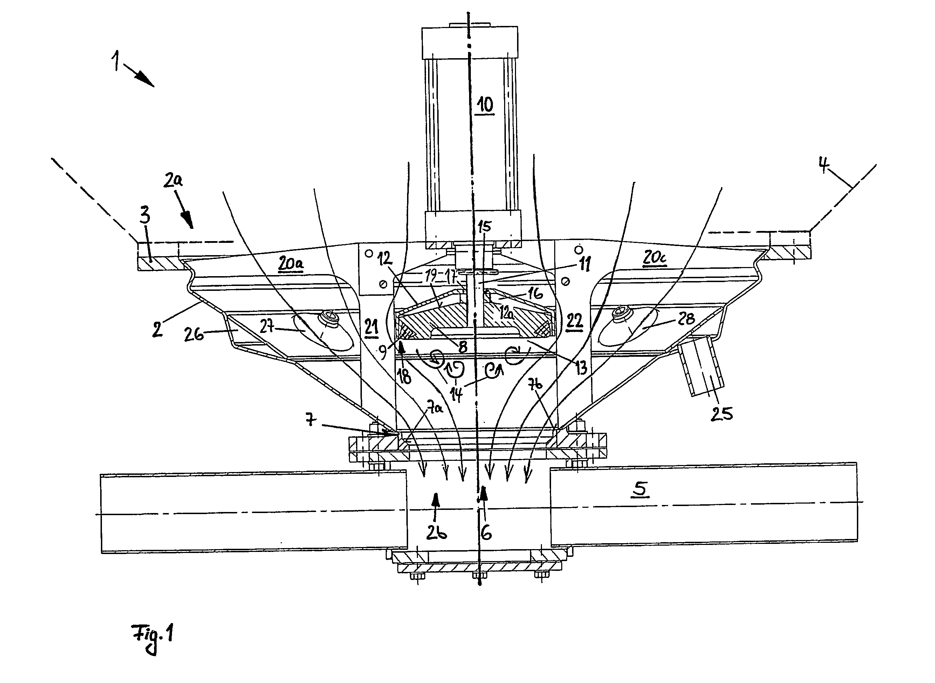

Es ist eine Hubeinheit vorgesehen, mit welcher der Verschlussteller 8 aus der Absperrposition heraus bewegt und das Absperrventil geöffnet werden kann, wie in Fig. 1 gezeigt. Im vorliegenden Ausführungsbeispiel ist als Hubeinheit ein Hubzylinder 10 mit einer Kolbenstange 11 vorgesehen. Der Hubzylinder 10 ist stationär mit dem Gehäuse 2 verbunden. Der Verschlussteller 8 ist seinerseits an der Kolbenstange 11 des Hubzylinders 10 fixiert. Zwecks öffnen des Absperrventils wird der Verschlussteller 8 aus seiner in Fig. 2 gezeigten Absperrposition hinaus und zwecks Schließen in seine Absperrposition hinein bewegt.

Zusätzlich zu dem Verschlussteller 8 ist ein Abschirmungselement in Form einer Abschirmungsglocke 12 vorgesehen. Diejenige Fläche des Verschlusstellers 8, die der Zuflussseite 2a des Gehäuses 2 zugekehrt und somit der Strömung ausgesetzt ist, ist von der Abschirmungsglocke 12 verdeckt. Diejenige Fläche des Verschlusstellers 8, die der Strömungsseite gegenüberliegt, nämlich auf der Schattenseite der Strömung liegt, ist nicht von der Abschirmungsglocke 12 verdeckt. Die Abschirmungsglocke 12 weist einen größeren Querschnitt auf als der Verschlussteller 8. Ein umlaufender Rand der Abschirmungsglocke 12 umgibt die Dichtung 9 des Verschlusstellers 8, wenn dieser aus der Absperrposition heraus bewegt und das Absperrventil, wie in Fig. 1 dargestellt, geöffnet ist. In der geöffneten Position ist die Dichtung 9 des Verschlusstellers 8 verdeckt und gegen Schüttgut abgeschirmt, das von der Strömungsseite zufließt. Schüttgut kann nicht direkt mit der Dichtung 9 in Kontakt kommen. Es trifft stattdessen auf die Abschirmungsglocke 12.

In der Mitte der Abschirmungsglocke 12 ist eine Bohrung 12a vorgesehen, mit der die Abschirmungsglocke 12 auf der Kolbenstange 11 des Hubzylinders 10 aufgesteckt ist. Es handelt sich hierbei um eine Führungseinrichtung über einen Gleitsitz zwischen der Kolbenstange 11 und der Abschirmungsglocke 12. Die Führungseinrichtung gibt einen Bewegungsfreiraum für die Abschirmungsglocke 12 vor, indem der Gleitsitz eine leichte Verschiebbarkeit der Abschirmungsglocke 12 auf der Kolbenstange 11 ermöglicht.

Im geöffneten Zustand des Absperrventils nach Fig. 1 hat die Kolbenstange 11 den Verschlussteller aus 8 dessen Absperrposition heraus bewegt und die Abschirmungsglocke 12 dadurch mit angehoben. Fließendes Schüttgut umströmt aus dem Silobehälter 4 kommend den Hubzylinder 10 sowie die Abschirmungsglocke 12 und den Verschlussteller 8. In dieser Position liegt die Abschirmungsglocke 12 mit ihrer Innenseite auf dem äußeren Rand des Verschlusstellers 8 auf und umgibt die Dichtung 9 des Verschlusstellers 8. Auf diese Weise ist die Dichtung 9 vor dem fließenden Schüttgut geschützt.

In Fließrichtung hinter dem Verschlussteller 8, nämlich auf der Schattenseite der Strömung bildet sich an der nicht abgeschirmten Seite des Verschlusstellers 8 ein Strömungstotraum, in dem allenfalls leichte Verwirbelungen 14 des Schüttguts auftreten. Die Verwirbelungen 14 haben einen niedrigen Energieinhalt und verursachen keinen nennenswerten Verschleiß an dem Verschlussteller 8 und dessen Dichtung 9.

Zum Schließen des Absperrventils wird der Hubzylinder 10 betätigt. Dabei bewegt sich die Kolbenstange 11 mit dem daran befestigten Verschlussteller 8 sowie der auf dem Verschlussteller 8 aufliegenden Abschirmungsglocke 12 bis der Verschlussteller 8 seine in Fig. 2 dargestellte Absperrposition erreicht hat.

Die Konstruktion ist jedoch so gestaltet, dass zunächst die Abschirmungsglocke 12 an einer Anlagefläche 7b des Gehäuses 2 anstößt. Die Anlagefläche 7b ist in dem Dichtungsbereich 7 des Gehäuses 2 angeordnet und umgibt die für den Verschlussteller 8 vorgesehene Dichtungsfläche 7a. Die Anlagefläche 7b ist zudem auf einem anderen Niveau angeordnet als die Dichtungsfläche 7a und zwar liegt die Anlagefläche 7b näher an dem Hubzylinder 10 als die Dichtungsfläche 7a.

Je näher die Abschirmungsglocke 12 beim Schließen des Absperrventils an die Anlagefläche 7b heranbewegt wird, desto enger wird der Spalt und umso geringer der Schüttgutstrom, der durch die Abflussseite 2b des Gehäuses 2 entweicht.

Abhängig von der Beschaffenheit des Schüttguts können vereinzelt Partikel oder Körner zwischen der Abschirmungsglocke 12 und der Anlagefläche 7b eingeklemmt werden. Zunächst wird die Abschirmungsglocke 12 dabei lediglich durch den Druck des Schüttguts gegen die Anlagefläche 7b gepresst. Die Dichtung 9 des Verschlusstellers 8 hat dann noch keinen Kontakt mit der Dichtungsfläche 7a, so dass Schüttgut noch aus dem Absperrventil abfließen kann. Der Hubzylinder 10 wird jedoch weiter bewegt, bis der Verschlussteller 8 seine tiefer liegende Absperrposition erreicht hat.

Die Konstruktion weist somit zwei Abdichtungsstufen auf, nämlich eine erste Abdichtungsstufe durch die Abschirmungsglocke 12 in deren Anlageposition und eine zweite Abdichtungsstufe durch den Verschlussteller 8 mit Dichtung 9 in deren Absperrposition. Sobald die erste Abdichtungsstufe erreicht ist, in dem die Abschirmungsglocke 12 so nah als möglich an die Anlagefläche 7b heran bewegt ist, kommt die Strömung nahezu zum Stillstand. Nun wird als zweite Abdichtungsstufe der Verschlussteller 8 mit Dichtung 9 schonend, weil nahezu ungehindert von einer Strömung, in seine Absperrposition bewegt.

Die Dichtungsfläche 7a und die Anlagefläche 7b sind in einem Bauteil integriert, das zwecks Austausch leicht demontiert und ersetzt werden kann.

An der Kolbenstange 11 ist ein Sperranschlag 15 angebracht. Dieser Sperranschlag 15 ist so positioniert, dass er dann an der Abschirmungsglocke 12 anstößt, wenn der Verschlussteller 8 seine Absperrposition erreicht hat. Außer dem Druck des Schüttguts auf die Abschirmungsglocke 12 erzeugt der Hubzylinder 10 einen zusätzlichen Druck auf die Abschirmungsglocke 12. Dieser Druck wird von dem fest mit der Kolbenstange 11 verbundenen Sperranschlag 15 in die Abschirmungsglocke 12 einleitet, die dadurch fest gegen die Anlagefläche 7b des Dichtungsbereiches 7 des Gehäuses 2 gepresst wird. Je nach Beschaffenheit des Schüttguts können Schüttgutkörner dadurch zerdrückt und ein Spalt zwischen Abschirmungsglocke 12 und Anlagefläche 7b auf ein Minimum reduziert werden.

Um eine dauerhafte Funktion der Abschirmungsglocke 12 zu gewährleisten, ist an zwei Stellen der Konstruktion eine Verschiebbarkeit zwischen Bauteilen gewährleistet. Einerseits ist eine relative Verschiebbarkeit der Abschirmungsglocke 12 auf der Kolbenstange 11 und andererseits ist eine relative Verschiebbarkeit zwischen dem Verschlussteller 8 und der den Verschlussteller umgebenden Abschirmungsglocke 12.

Zwischen der Abschirmungsglocke 12 und dem Verschlussteller 8 besteht ein Hohlraum 16, dessen Größe variiert je nach Schaltstellung -geöffnet/geschlossen- des Absperrventils.

Die Konstruktion ist so gestaltet, dass dieser Hohlraum 16 sich nicht durch eindringende Schüttgutpartikel und feine Staubpartikel füllen kann, welche die relative Verschiebbarkeit von Abschirmungsglocke 12 und Verschlussteller 8 beeinträchtigen würden.

Zu diesem Zweck können beispielsweise geeignete Dichtungen vorgesehen sein, die gegebenenfalls eine Belüftung aufweisen. Die vorliegende Konstruktion löst das Problem jedoch auf andere Weise. Es wird nämlich ein geringer Zufluss von Staubpartikeln in den Hohlraum 16 zugelassen, wobei jedoch die Konstruktion so gestaltet ist, dass dieser Zufluss im Betrieb des Absperrventils selbsttätig aus dem Hohlraum 16 entweichen kann. Dabei erfolgt der Zufluss von Staubpartikeln über eine erste Öffnung. Die erste Öffnung ist durch den Gleitsitz beziehungsweise Gleitspalt zwischen der Kolbenstange 11 und der Abschirmungsglocke 12 gebildet. Die Ableitung der Staubpartikel erfolgt durch eine zweite Öffnung, nämlich einen seitlichen Spalt beziehungsweise Abschirmungsspalt 18 zwischen dem Verschlussteller 8 und der Innenseite der Abschirmungsglocke 12.

Um die Ausleitung von Staubpartikeln aus dem Hohlraum 16 zu fördern, ist die dem Hohlraum 16 zugewandte Fläche des Verschlusstellers 8 als geneigte Rutschfläche 19 ausgebildet. Die Rutschfläche 19 ist vom Zentrum zum Rand des Verschlusstellers 8 geneigt, damit in den Hohlraum 16 eingedrungene Staubpartikel in Richtung des Abschirmungsspalts 18 rutschen.

Im geöffneten Zustand des Absperrventils, wie in Fig. 2 dargestellt, können die Staubpartikel nicht entweichen, weil die Abschirmungsglocke 12 auf dem oberen Rand des Verschlusstellers 8 aufliegt. Die Staubpartikel können aus dem Hohlraum 16 nicht in den Abschirmungsspalt 12 gelangen.

Aus der in Fig. 1 gezeigten Position erfolgt die Ausleitung der Staubpartikel aus dem Hohlraum in zwei Schritten. Zunächst wird das Absperrventil geschlossen. Im geschlossenen Zustand des Absperrventils befindet sich der Verschlussteller 8 in der Absperrposition, die tiefer liegt, als die Anlageposition der Abschirmungsglocke 12. In dieser Position können Staubpartikel in einem ersten Schritt in den Abschirmungsspalt 18 hineinrieseln. Sie bleiben jedoch auf der Dichtung 9 liegen, weil das Absperrventil geschlossen ist. Der zweite Schritt der Ausleitung der Staubpartikel erfolgt durch das nächste Öffnen des Absperrventils. In dem Moment, in dem der Verschlussteller 8 aus der Absperrposition heraus bewegt wird, hebt die Dichtung 9 von der Dichtungsfläche 7a ab und die Staubpartikel entweichen durch den frei gewordenen Abschirmungsspalt 18 in die Schüttgutströmung.

Hierbei wirkt sich günstig aus, dass für den Gleitspalt 17 ein geringerer Querschnitt gewählt worden ist als für den Abschirmungsspalt 18. Auf diese Weise ist gewährleistet, dass die Menge der in den Hohlraum 16 eindringenden Staubpartikel niemals größer ist als die Menge der aus dem Hohlraum 16 entweichenden Staubpartikel. Die Konstruktion sieht für den Gleitspalt 17 und den Abschirmungsspalt 18 ausreichendes Spiel vor, um eine leichtgängige Bewegung ohne Gefahr der Verkantung von Bauteilen zu ermöglichen.

Mit der letztgenannten Lösung für das technische Problem der Staubpartikel innerhalb des Hohlraums 16 kehrt die Erfindung davon ab, den Hohlraum 16 möglichst dicht abzuschließen und staubfrei zu halten. Stattdessen wird eine gezielte Einleitung von staubförmigen Partikeln zugelassen und für eine sichere Ausleitung dieser staubförmigen Partikel gesorgt. Weiter verbessert werden kann die Ausleitung von Staubpartikeln durch besonders glatte Oberflächen oder durch eine Beschichtung mit einem Material, das eine geringe Haftung für Staubpartikel aufweist.

Der Hubzylinder 10 ist mittels einer Halterung 20 innerhalb des Gehäuses fixiert. Gemäß der Zeichnung ragt der Hubzylinder 10 über das trichterförmige Gehäuse 2 hinaus. Er ist mit mehreren radial angeordneten Streben 20a, 20b und 20c gehalten, die auf der weiten Seite des Gehäuses 2 an dem Anschlussring 3 befestigt sind. Zusätzlich sind Stützen 21 und 22 vorgesehen, die sich in paralleler Richtung zur Hubrichtung des Hubzylinders 10 erstrecken und mit einem kleinen Spalt zu der Abschirmungsglocke 12 in Umfangsrichtung um die Abschirmungsglocke 12 gruppiert sind. Die Stützen 21 und 22 dienen einerseits der Lagerung des Hubzylinders 10 und wirkt andererseits als Führungseinrichtung für die Abschirmungsglocke 12. Es sind wenigstens drei Stützen derart um den Umfang der Abschirmungsglocke 12 angeordnet, dass diese seitlich nicht ausweichen kann, wenn sie beispielsweise einseitig von Schüttgut angeströmt wird und daher Kräfte, die in radialer Richtung die Abschirmungsglocke 12 beaufschlagen sowie die Kolbenstange 11 biegen. Die Stützen geben somit einen Bewegungsfreiraum für die Abschirmungsglocke 12 vor. Aus diesem Bewegungsfreiraum kann die Abschirmungsglocke 12 nicht ausweichen.

Zwischen der Abschirmungsglocke 12 und dem Sperranschlag 15 kann eine vorgespannte Feder vorgesehen sein, welche die Abschirmungsglocke 12 stets zum Verschlussteller 8 drückt.

Außen an dem Gehäuse 2 ist ein Anschlussstutzen 25 einer Auflockerungseinrichtung angeordnet, durch die Pressluft zugeführt werden kann. Der Anschlussstutzen 25 führt in einen Ringkanal 24, der umfänglich an dem Gehäuse 2 vorgesehen ist. Aus dem Ringkanal 26 kann Pressluft in das Gehäuse 2 eingeleitet werden, um das Schüttgut aufzulockern.

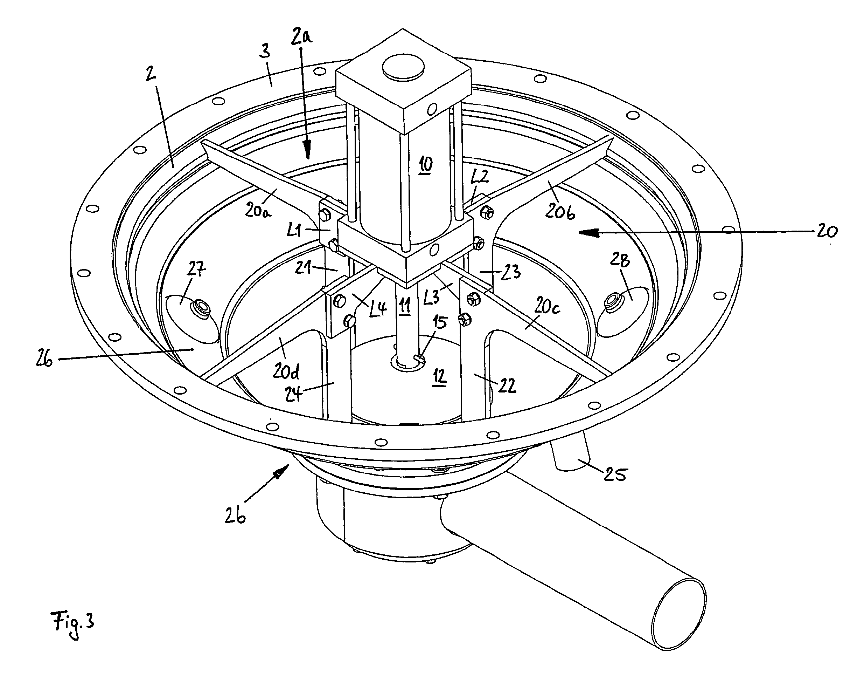

Eine perspektivische Darstellung des Absperrventils ist in Fig. 3 gezeigt. Danach sind Streben 20a, 20b, 20c und 20d um den Hubzylinder 10 angeordnet und bilden mit integrierten Stützen 21, 22, 23 und 24 die Halterung 20. Die Streben 20a, 20b, 20c und 20d sind an dem dem Hubzylinder 10 zugewandten Ende mit angeschraubten Laschen L1, L2, L3 und L4 versehen, auf denen der Hubzylinder 10 gelagert ist. Die Streben 20a, 20b, 20c und 20d sind in dem Bereich des Anschlussrings 3 mit der Innenwand des Gehäuses 2 verbunden. An dem Ringkanal 26 sind übliche Auflockerungspilze 27 und 28 vorgesehen.

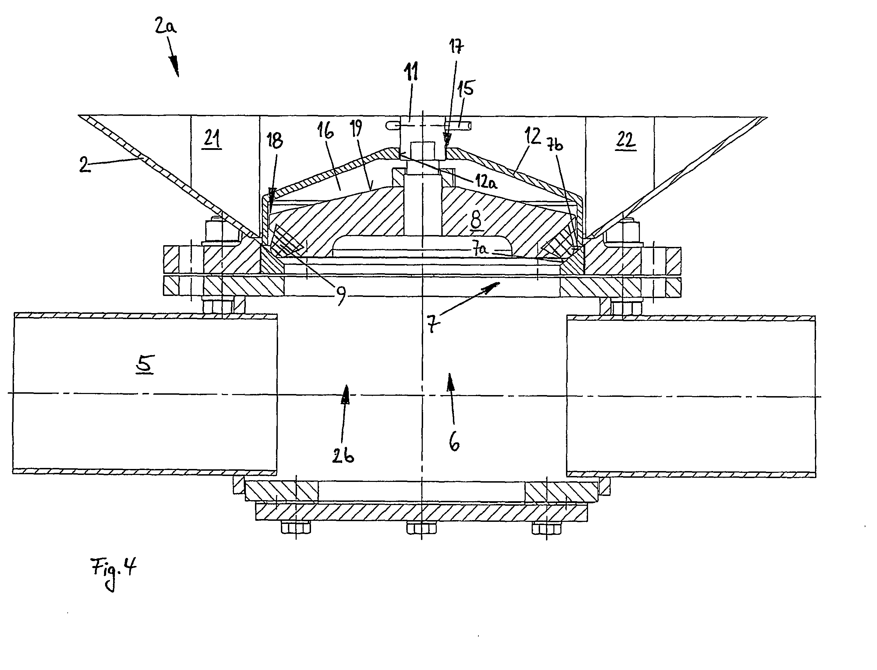

Die in Fig. 4 dargestellte alternative Ausführungsform des Absperrventils weist einen anderen Dichtungsbereich 7 auf als die Ausführungsform gemäß der Figuren 1 und 2. Es ist lediglich die Abflussseite 2b als vergrößerter Ausschnitt gezeigt. Die Besonderheit des variierten Dichtungsbereichs 7 besteht darin, dass eine einzige konische Fläche vorgesehen ist, welche sowohl die Dichtungsfläche 7a für die Dichtung des Verschlusstellers 8 als auch die Anlagefläche 7b für die Abschirmungsglocke 12 bildet. Dies bietet den Vorteil, dass zwischen der Anlagefläche 7b und der Dichtungsfläche 7a keinerlei Kante vorhanden ist. Demgegenüber weist das Ausführungsbeispiel gemäß der Figuren 1 und 2 an dieser Stelle eine Kante auf. Diese Kante kann eine Beschädigung der Dichtung 9 des Verschlusstellers 8 verursachen, wenn es zu einer Exzentrizität zwischen Verschlussteller 8 und Dichtungsfläche 7a kommt. Dies kann im Betrieb des Absperrventils beispielsweise durch eine entsprechend große Verbiegung der Kolbenstange 11 vorkommen. Der Verzicht auf eine Kante ist daher schonend für die Dichtung 9. Im Übrigen unterscheidet sich die Ausführungsform nicht von dem Ausführungsbeispiel gemäß der Figuren 1 und 2 daher sind für gleiche Bauteile in Fig. 4 die gleichen Bezugszeichen angegeben, wie in den Figuren 1 und 2. Wegen der vergrößerten Darstellung sind einige Details, wie beispielsweise der Abschirmungsspalt 18, der Gleitspalt 17 und die Bohrung 12a der Abschirmungsglocke 12 in Fig. 4 deutlicher erkennbar als in den Figuren 1 und 2.

Außerdem werden sowohl der Verschlussteller 8 als auch die Abschirmungsglocke durch die integrierte konische Dichtungs- und Anlagefläche zentriert. Dadurch kann sogar eine leicht exzentrische Montage des Hubzylinders 10 über dem Dichtungsbereich 7 geduldet werden. Dies, weil die Kolbenstange 11 des Hubzylinders 10 nachgiebig ist und sich durch die Zentrierung des Verschlusstellers 8 in der Dichtungsfläche 7a selbsttätig ausrichtet.

Weiterhin kann wegen der Neigung der konischen Fläche weder auf der Anlagefläche 7b noch auf der Dichtungsfläche 7a Schüttgut liegen bleiben und die Funktion des Absperrventils beeinträchtigen.

Die integrierten Flächen, nämlich Anlagefläche 7b und Dichtungsfläche 7a sind ebenfalls in einem Bauteil integriert, das zwecks Austausch leicht demontiert und ersetzt werden kann.

### Bezugszeichenliste

- 1: Absperrventil
- 2: Gehäuse
- 2a: Zuflussseite
- 2b: Abflussseite
- 3: Anschlussring
- 4: Silobehälter
- 5: Entleerungsleitung
- 6: Entleerungsöffnung
- 7: Dichtungsbereich
- 7a: Dichtungsfläche
- 7b: Anlagefläche
- 8: Verschlussteller
- 9: Dichtung
- 10: Hubzylinder
- 11: Kolbenstange
- 12: Abschirmungsglocke
- 12a: Bohrung
- 13: Schattenseite
- 14: Verwirbelung
- 15: Sperranschlag
- 16: Hohlraum
- 17: Gleitspalt
- 18: Abschirmungsspalt
- 19: Rutschfläche
- 20: Halterung
- 20a: Strebe
- 20b: Strebe
- 20c: Strebe
- 20d: Strebe
- 21: Stütze
- 22: Stütze
- 23: Stütze
- 24: Stütze
- 25: Anschlussstutzen
- 26: Ringkanal
- 27: Auflockerungspilz
- 28: Auflockerungspilz
- L1: Lasche
- L2: Lasche
- L3: Lasche
- L4: Lasche

## Patentansprüche

1. Absperrventil (1) für rieselfähiges Schüttgut, mit einem Gehäuse (2), das eine Zuflussseite (2a) aufweist, mit der es an einen Silobehälter (4) anschließbar ist und mit einem Dichtungsbereich (7) an einer Auslaufseite (2b) des Gehäuses (2), sowie mit einem Verschlusselement (8), das eine Dichtung (9) aufweist, die mit einer in dem Dichtungsbereich (7) des Gehäuses (2) vorgesehenen Dichtungsfläche (7a) zusammenwirkt, wobei das Verschlusselement (8) über eine Hubeinheit (10) in eine Absperrposition hinein und aus der Absperrposition hinaus bewegbar ist, wobei ein Abschirmungselement (12) vorgesehen ist, mit der Maßgabe, dass zumindest die Dichtung (9) des Verschlusselements (8) von dem Abschirmungselement (12) wenigstens teilweise gegen fließendes Schüttgut abgeschirmt ist, und wobei ein Hohlraum (16) zwischen dem Abschirmungselement (12) und dem Verschlusselement (8) vorgesehen ist, **dadurch gekennzeichnet, dass** eine erste Öffnung (17) vorgesehen ist, durch die Schüttgutpartikel und Staubpartikel in den Hohlraum (16) eindringen können, und dass eine zweite Öffnung (18) vorgesehen ist, durch die Staubpartikel aus dem Hohlraum (16) ausleitbar sind.

2. Absperrventil nach Anspruch 1, **dadurch gekennzeichnet, dass** in dem Dichtungsbereich (7) des Gehäuses (2) eine Anlagefläche (7b) für das Abschirmungselement (12) vorgesehen ist, und dass durch die Anlagefläche (7b) eine Anlageposition für das Abschirmungselement (12) vorgegeben ist.

3. Absperrventil nach Anspruch 2, **dadurch gekennzeichnet, dass** die Anlagefläche (7b) für das Abschirmungselement (12) in Fließrichtung des Schüttguts vor der Dichtungsfläche (7a) für die Dichtung (9) des Verschlusselements (8) angeordnet ist.

4. Absperrventil nach einem der Ansprüche 1 bis 3, **dadurch gekennzeichnet, dass** eine Führungseinrichtung (11, 21, 22, 23, 24) für das Abschirmungselement 12 vorgesehen ist.

5. Absperrventil nach Anspruch 4, **dadurch gekennzeichnet, dass** durch die Führungseinrichtung (11, 21, 22, 23, 24) ein Bewegungsbereich für das Abschirmungselement 12 vorgegeben ist.

6. Absperrventil nach Anspruch 5, **dadurch gekennzeichnet, dass** der Bewegungsbereich wenigstens so groß ist, wie der in Fließrichtung des Schüttguts vorgesehene Abstand zwischen der Absperrposition des Verschlusselements (8) und der Anlageposition des Abschirmungselements (12).

7. Absperrventil nach Anspruch 5 oder 6, **dadurch gekennzeichnet, dass** der Bewegungsbereich durch wenigstens einen Sperranschlag (15) begrenzt ist.

8. Absperrventil nach einem der Ansprüche 1 bis 7, **dadurch gekennzeichnet, dass** der Sperranschlag (15) mit der Hubeinheit (10) verbunden ist.

9. Absperrventil nach Anspruch 7 oder 8, **dadurch gekennzeichnet, dass** das Abschirmungselement (12) dann von dem Sperranschlag (15) gegen die Anlagefläche (7b) gedrückt ist, wenn das Verschlusselement (8) von der Hubeinheit (10) in seine Absperrposition hinein bewegt worden ist.

10. Absperrventil nach einem der Ansprüche 1 bis 9, **dadurch gekennzeichnet, dass** die Dichtungsfläche (7a) in Bezug auf die Fließrichtung des Schüttguts schräg angeordnet, nämlich von der Zuflussseite (2a) des Gehäuses (2) in Richtung der Abflussseite (2b) des Gehäuses (2) von außen nach innen geneigt ist.

11. Absperrventil nach einem der Ansprüche 1 bis 10, **dadurch gekennzeichnet, dass** der Querschnitt der ersten Öffnung (17) geringer ist als der Querschnitt der zweiten Öffnung (18).

12. Absperrventil nach Anspruch 11, **dadurch gekennzeichnet, dass** die dem Hohlraum (16) zugewandte Fläche des Verschlusselements (8) zumindest teilweise als geneigte Rutschfläche (19) ausgebildet ist, und dass die Rutschfläche (19) vom Zentrum zum Rand des Verschlusselements (8) geneigt ist.

13. Absperrventil nach einem der Ansprüche 1 bis 12, **dadurch gekennzeichnet, dass** das Gehäuse (2) mit einer Auflockerungseinrichtung versehen ist, durch die Pressluft von außen in das Gehäuse (2) einleitbar ist.

## Claims

1. Stop valve (1) for free-flowing loose material, with a chamber (2) comprising an inflow side (2a), with which it can be connected to a silo container (4), and with a sealing area (7) at an outlet side (2b) of the chamber (2), as well as with a closure element (8) comprising a seal (9) which interacts with a sealing face (7a) provided in the sealing area (7) of the chamber (2), wherein the closure element (8) can be moved via a lifting unit (10) into a stop position and out of the stop position, wherein a shielding element (12) is provided, with the proviso that at least the seal (9) of the closure element (8) is shielded at least partly by the shielding element (12) against flowing loose material, and wherein a hollow space (16) is provided between the shielding element (12) and the closure element (8), **characterised in that** a first opening (17) is provided, through which opening loose material particles and dust particles can penetrate into the hollow space (16), and that a second opening (18) is provided, through which opening the dust particles can be diverted out of the hollow space (16).

2. Stop valve according to Claim 1, **characterised in that** a contact face (7b) for the shielding element (12) is provided in the sealing area (7) of the chamber (2), and that a contact position for the shielding element (12) is predetermined by the contact face (7b).

3. Stop valve according to Claim 2, **characterised in that** the contact face (7b) for the shielding element (12) is disposed before the sealing face (7a) for the seal (9) of the closure element (8) in the direction of flow of the loose material.

4. Stop valve according to any one of Claims 1 to 3, **characterised in that** a guide device (11, 21, 22, 23, 24) is provided for the shielding element (12).

5. Stop valve according to Claim 4, **characterised in that** an area of movement for the shielding element (12) is predetermined by the guide device (11, 21, 22, 23, 24).

6. Stop valve according to Claim 5, **characterised in that** the area of movement is at least as large as the distance between the stop position of the closure element (8) and the contact position of the shielding element (12) which is provided in the direction of flow of the loose material.

7. Stop valve according to Claim 5 or 6, **characterised in that** the area of movement is delimited by at least one blocking stop (15).

8. Stop valve according to any one of Claims 1 to 7, **characterised in that** the blocking stop (15) is connected to the lifting unit (10).

9. Stop valve according to Claim 7 or 8, **characterised in that** the shielding element (12) is pushed by the blocking stop (15) against the contact face (7b) when the closure element (8) has been moved into its stop position by the lifting unit (10).

10. Stop valve according to any one of Claims 1 to 9, **characterised in that** the sealing face (7a) is disposed obliquely in relation to the direction of flow of the loose material, that is inclined from the outside inwards from the inflow side (2a) of the chamber (2) in the direction of the outflow side (2b) of the chamber (2).

11. Stop valve according to any one of Claims 1 to 10, **characterised in that** the cross section of the first opening (17) is smaller than the cross section of the second opening (18).

12. Stop valve according to Claim 11, **characterised in that** the face of the closure element (8) which faces the hollow space (16) is formed at least partly as an inclined sliding face (19), and that the sliding face (19) is inclined from the centre to the edge of the closure element (8).

13. Stop valve according to any one of Claims 1 to 12, **characterised in that** the chamber (2) is provided with an aerating device, through which compressed air can be introduced from outside into the chamber (2).

## Revendications

1. Soupape d'arrêt (1) de matériau en vrac coulant, avec un boîtier (2) présentant un côté d'arrivée (2a) destiné à la connexion à un silo (4), une zone de joint (7) sur un côté de sortie (2b) du boîtier (2) et un élément de fermeture (8) présentant un joint (9) interagissant avec une surface de joint (7a) prévue dans la zone de joint (7) du boîtier (2), l'élément de fermeture (8) pouvant être amené, par le biais d'une unité de course (10), dans une position d'arrêt et sorti de la position d'arrêt, un élément de protection (12) étant prévu, de telle sorte qu'au moins le joint (9) de l'élément de fermeture (8) est au moins partiellement protégé par l'élément de protection (12) contre du matériau en vrac qui s'écoule, et une cavité (16) étant prévue entre l'élément de protection (12) et l'élément de fermeture (8), **caractérisée en ce qu'**il est prévu une première ouverture (17) à travers laquelle des particules de matériau en vrac et des particules de poussière peuvent pénétrer dans la cavité (16) et **en ce qu'**il est prévu une deuxième ouverture (18) à travers laquelle des particules de poussière peuvent sortir de la cavité (16).

2. Soupape d'arrêt selon la revendication 1, **caractérisée en ce que** dans la zone de joint (7) du boîtier (2), une face d'appui (7b) est prévue pour l'élément de protection (12) et **en ce que** la face d'appui (7b) prédéfinit une position d'appui pour l'élément de protection (12).

3. Soupape d'arrêt selon la revendication 2, **caractérisée en ce que** la face d'appui (7b) pour l'élément de protection (12) est disposée dans le sens d'écoulement du matériau en vrac avant la surface de joint (7a) pour le joint (9) de l'élément de fermeture (8).

4. Soupape d'arrêt selon l'une quelconque des revendications 1 à 3, **caractérisée en ce qu'**il est prévu un dispositif de guidage (11, 21, 22, 23, 24) pour l'élément de protection (12).

5. Soupape d'arrêt selon la revendication 4, **caractérisée en ce que** le dispositif de guidage (11, 21, 22, 23, 24) prédéfinit une zone de mouvement pour l'élément de protection (12).

6. Soupape d'arrêt selon la revendication 5, **caractérisée en ce que** la zone de mouvement est au moins aussi grande que l'espacement, prévu dans le sens d'écoulement du matériau en vrac, entre la position d'arrêt de l'élément de fermeture (8) et la position d'appui de l'élément de protection (12).

7. Soupape d'arrêt selon la revendication 5 ou 6, **caractérisée en ce que** la zone de mouvement est délimitée par au moins une butée de blocage (15).

8. Soupape d'arrêt selon l'une quelconque des revendications 1 à 7, **caractérisée en ce que** la butée de blocage (15) est reliée à l'unité de course (10).

9. Soupape d'arrêt selon la revendication 7 ou 8, **caractérisée en ce que** l'élément de protection (12) est ensuite appuyé par la butée de blocage (15) contre la face d'appui (7b) lorsque l'élément de fermeture (8) est déplacé dans sa position d'arrêt par l'unité de course (10).

10. Soupape d'arrêt selon l'une quelconque des revendications 1 à 9, **caractérisée en ce que** la surface de joint (7a) est disposée obliquement en référence au sens d'écoulement du matériau en vrac, à savoir, qu'elle est inclinée de l'extérieur vers l'intérieur, du côté d'arrivée (2a) du boîtier (2) en direction du côté de sortie (2b) du boîtier (2).

11. Soupape d'arrêt selon l'une quelconque des revendications 1 à 10, **caractérisée en ce que** la section transversale de la première ouverture (17) est plus petite que la section transversale de la deuxième ouverture (18).

12. Soupape d'arrêt selon la revendication 11, **caractérisée en ce que** la face, orientée vers la cavité (16), de l'élément de fermeture (8) est réalisée, au moins en partie, en tant que surface de glissement (19) inclinée et **en ce que** la surface de glissement (19) est inclinée du centre vers le bord de l'élément de fermeture (8).

13. Soupape d'arrêt selon l'une quelconque des revendications 1 à 12, **caractérisée en ce que** le boîtier (2) est pourvu d'un dispositif de dégagement, à travers lequel l'air comprimé peut être introduit de l'extérieur dans le boîtier (2).
